# EUROPÄISCHE PATENTSCHRIFT

(11) **EP 0 561 203 B1**
(45) Veröffentlichungstag und Bekanntmachung des Hinweises auf die Patenterteilung: **21.05.1997**
(21) Anmeldenummer: 93103224.7
(22) Anmeldetag: 01.03.1993
(51) Int. Cl.: C03B 40/027, C03B 40/04, B22C 23/02, F23D 14/02, F23D 14/32

(54) **Brenner zur Beschichtung von Werkstücken**
Burner for coating workpieces
Brûleur pour revêtir des objets

(30) Priorität: 17.03.1992 DE 4208517
(43) Veröffentlichungstag der Anmeldung: 22.09.1993
(73) Patentinhaber: Linde Aktiengesellschaft, 65189 Wiesbaden (DE)
(72) Erfinder: Schumacher, Klaus, Dipl.-Ing., W-5110 Alsdorf (DE)
(74) Vertreter: Schaefer, Gerhard, Dr.

(56) Entgegenhaltungen:
- EP-A- 0 022 385
- EP-A- 0 120 373
- EP-A- 0 393 554
- EP-A- 0 471 956
- FR-A- 2 570 364

## Beschreibung

Zum Beschichten von beispielsweise Preßstempeln oder Formen bei der Glasherstellung oder anderen Werkzeugen mit einer schmierenden und/oder trennenden Schicht werden häufig kohlenstoffhaltige Mittel eingesetzt, die in flüssiger Form auf das Werkstück gesprüht und dann mit Hilfe einer Zündquelle auf dem Werkstück verbrannt werden und einen Belag mit trennender Wirkung auf dem Werkstück hinterlassen.

Da bei diesem Verfahren immer ein Teil des flüssigen kohlenstoffhaltigen Mittels das Werkstück nicht erreicht oder an diesem vorbeigesprüht wird, kommt es durch das Abfackeln dieser Trennmittelanteile zu einer erheblichen Belastung des Arbeitsplatzes und damit der Umwelt durch Kohlenstoff (Ruß) und anderen Verbrennungsprodukten.

Weiterhin ist aus der EP-0 368 267 ein Verfahren zum Beschichten der Innenflächen einer mit einer Öffnung versehenen Hohlform mit Kohlenstoffmaterial bekannt.

Dort wird ein Brenner, in dessen Kopf sich dreierlei Ausströmöffnungen, nämlich für Flammengase, für Kohlenwasserstoffgase und für Sauerstoff befinden, über die Öffnung der Hohlform geführt, anschließend der Innenraum der Form mit Sauerstoff gespült und dann das Kohlenwasserstoffgas dort eingeleitet, woraufhin das entstehende Gemisch mit Hilfe der Flammengase gezündet wird. Auch eine elektrische Zündung ist alternativ vorgesehen.

Diese Methode ist ausschließlich für Hohlkörper geeignet, deren Innenfläche mit einem Kohlenstoffmaterial beschichtet werden soll. Sie kann nicht zur Beschichtung von Preßstempeln oder anderer nicht-hohler Formen dienen.

Die EP-A-0 471 956 beschreibt einen Brenner, der eine Brennkammer aufweist, in die über eine Brennstofflanze ein Brenngas und über seitliche Eintrittsöffnungen in der Kammer Luft zugeführt wird. Die Brennkammer dient zur stufenweisen Zufuhr von Verbrennungsluft, um die Entstehung von Stickoxiden zu vermeiden und eine vollständige Verbrennung zu erreichen. Dieser Brenner wird bei Feuerungen eingesetzt mit dem Ziel hoher Verbrennungstemperaturen und niedriger Schadstoffemissionen. Die Bildung von Ruß beim Einsatz eines solchen Brenners ist weder vorgesehen noch erwünscht. Er ist daher nicht dazu geeignet Gegenstände mit Kohlenstoff zu beschichten.

Aufgabe der vorliegenden Erfindung ist es, einen zum Beschichten von Werkstücken verschiedenster geometrischer Beschaffenheit geeigneten Brenner zu entwickeln, wobei mit diesem Brenner die Menge an kohlenstoffhaltigem Beschichtungsmaterial besser als bisher dosiert werden kann und die in bestimmtem Abstand befindlichen Werkstücke gezielt beschichtet werden können.

Der erfindungsgemäße Vorschlag zur Lösung dieser Aufgabe betrifft einen Brenner mit mindestens einer Zufuhrleitung für ein Brenngas und mindestens einer Zufuhrleitung für Sauerstoff oder ein sauerstoffhaltiges Gas, der eine Gemischkammer für diese Gase aufweist, wobei sich im Brennerkopf eine mit den Zufuhrleitungen verbundene Düse mit mehreren Austrittsöffnungen für das Brenngas und den Sauerstoff oder das sauerstoffhaltige Gas befindet, weiterhin dem Brennerkopf die Gemischkammer nachgeschaltet ist, die mindestens eine stromabwärts gelegene Austrittsöffnung besitzt, und schließlich mindestens eine Zufuhrleitung für ein Hüllgas jeweils bis zu einer Austrittsöffnung der Gemischkammer geführt ist und die Hüllgasaustrittsöffnungen neben der jeweiligen Austrittsöffnung der Gemischkammer angebracht sind.

Durch die im Brennerkopf befindlichen Austrittsdüsen für das Brenngas und den Sauerstoff oder das sauerstoffhaltige Gas läßt sich somit eine genau dosierte Gasgemischmenge in die den Brennerkopf nachgeschaltete Gemischkammer einleiten. Weiter stromabwärts befindet sich erfindungsgemäß mindestens eine Austrittsöffnung der Gemischkammer. Wird nun das Gasgemisch in der Gemischkammer gezündet, findet eine Ausbreitung der entstehenden Verbrennungsprodukte in der Gemischkammer und ein Verlassen derselbigen durch die Austrittsöffnung(en) statt.

Mit dem erfindungsgemäßen Brenner ist es nunmehr möglich, die der gewünschten Menge an Kohlenstoff entsprechende Menge von Brenngas und Sauerstoff in die Gemischkammer einzuleiten.

Der nach Verbrennen der Mischung entstehende Kohlenstoff wird dann durch die Austrittsöffnung(en) der Gemischkammer auf das zu beschichtende Werkstück gebracht. Anzahl und Form dieser Austrittsöffnung(en) bestimmen dabei den beschichteten Bereich auf dem Werkstück.

Durch verschiedene Gestaltungsarten dieser Austrittsöffnung(en) kann der Austrittsstrahl mit dem Beschichtungsmittel auf unterschiedliche Größen und Entfernungen der Werkstücke abgestimmt werden. Dadurch wird sichergestellt, daß nur das Werkstück und nicht auch die umgebenden Bereiche mit Kohlenstoff beschichtet werden.

Der Brenner weist mindestens eine Zufuhrleitung für ein Hüllgas auf, wobei die Zufuhrleitung(en) für das Hüllgas jeweils bis zu einer Austrittsöffnung der Gemischkammer geführt sind und die Hüllgasaustrittsöffnungen neben der jeweiligen Austrittsöffnung der Gemischkammer angebracht sind.

Die Hüllgasaustrittsöffnungen können dabei die Austrittsöffnung der Gemischkammer beispielsweise kreisförmig umgeben. Diese Maßnahme erhöht die Treffsicherheit beim Beschichten von Werkstücken. Der Hüllgasstrahl kann das im Austrittsstrahl aus der Gemischkammer befindliche Beschichtungsmaterial beschleunigen, auf einen geringeren Querschnitt verengen oder in größere Entfernung transportieren. Damit wird es z.B. möglich, auf die Dichte der Beschichtung stärker Einfluß zu nehmen.

Erfindungsgemäß kann außerdem die Gemischkammer in ihrem Volumen verstellbar sein. Damit wird die Menge des brennbaren Gasgemisches, die in die Gemischkammer geleitet wird, und somit die Menge des kohlenstoffhaltigen Beschichtungsmaterials, daß die Gemischkammer verläßt, kontrolliert.

Sinnvoll sind im Brenner vorgesehene Leitungen für ein Kühlmittel. Durch das Verbrennen des Brenngasgemisches in der Gemischkammer wird Energie frei, die den Brenner erhitzt. Ein Teil dieser Wärmemenge kann an das Kühlmittel abgegeben werden, das in den das Brennergehäuse durchsetzenden Leitungen zirkuliert.

Wie bereits geschildert eignet sich der erfindungsgemäße Brenner hervorragend zum Beschichten von Gegenständen, wie Formen, Preßstempel und ähnliches, mit Kohlenstoff, wobei hierzu eine Austrittsöffnung der Gemischkammer auf den zu berußenden Gegenstand gerichtet wird und über die Düse mit mehreren Austrittsöffnungen ein Brenngas und Sauerstoff oder ein sauerstoffhaltiges Gas in unterstöchiometrischem Verhältnis in die Gemischkammer eingeleitet und dort gezündet werden, wobei das entstehende Verbrennungsgas/KohlenstoffGemisch aus der Austrittsöffnung der Gemischkammer mit Druck ausströmt und sich Kohlenstoff auf dem Gegenstand abscheidet.

Um weit entfernte Werkstücke zu beschichten oder aber um die Dichte an Beschichtungsmaterial zu erhöhen, wird ein Hüllgas in die Zufuhrleitung(en) für das Hüllgas eingespeist. Als Hüllgas kann entweder Druckluft oder ein inertes Gas verwendet werden. Bei Druckluft ist darauf zu achten, daß der darin enthaltene Sauerstoff mit den aus der Gemischkammer strömenden Verbrennungsprodukten chemisch reagieren kann. Entstehendes Kohlenmonoxid und Wasserstoff könnten dadurch nachverbrannt oder Kohlenstoff oxidiert werden.

Eine gute Dosierbarkeit der Beschichtungsmenge wird durch eine Veränderung des Volumens der Gemischkammer je nach benötigter Kohlenstoffmenge erzielt.

Die Verwendung von Acetylen als Brenngas, das mit Sauerstoff in der Gemischkammer unterstöchiometrisch verbrannt wird, erweist sich zur Erzeugung einer Beschichtung aus Kohlenstoff besonders günstig.

Im folgenden soll ein Ausführungsbeispiel die Vorteile des erfindungsgemäßen Brenners und dessen Verwendung zum Berußen von Gegenständen verdeutlichen.

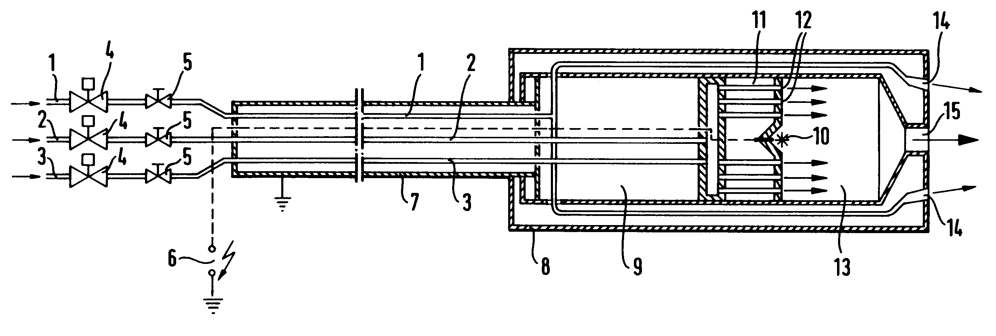

In der einzigen Zeichnung ist schematisch ein erfindungsgemäßer Brenner dargestellt. Dieser besteht aus dem Brennerschaft 7, dem sich das Gehäuse 8 anschließt, in dem sich der Brennerkopf 9 und die nachgeschaltete Düse 11 mit ihren Austrittsöffnungen 12 befindet. Das Gehäuse 8 umschließt außerdem die Gemischkammer 13, die eine Austrittsöffnung 15 besitzt. Von der Zündspannungsversorgung 6 führt eine elektrische Leitung zur Zündquelle 10 in der Gemischkammer 13.

An die Düse 11 sind Zufuhrleitungen 2 und 3 für ein sauerstoffhaltiges Gas oder reinen Sauerstoff sowie für ein Brenngas angeschlossen. Eine Zufuhrleitung für ein Hüllgas zieht sich durch den Brennerschaft 7 und das Gehäuse 8 und mündet in den Hüllgasaustrittsöffnungen 14.

Bei der Herstellung von Glasformen kommen drehsymmetrische Preßstempel, sogenannte Glaspegel, zum Einsatz, die mit einer Trennmittelschicht beschichtet werden, um ein Anhaften der erhitzten Glasmasse an dem Preßstempel zu verhindern. Hierfür haben sich Schichten aus Kohlenstoff (Ruß) als besonders günstig erwiesen. Die Kohlenstoffschichten haben je nach Zusammensetzung mehr trennende, schmierende oder thermisch isolierende Wirkung.

Ein erfindungsgemäßer Brenner wird im Abstand von bis zu 300 mm von dem Preßstempel positioniert, wobei die Austrittsöffnung 15 in Richtung Preßstempel weist.

Das Volumen der Gemischkammer 13 ist im Bereich von 25 cm³ bis 75 cm³ verstellbar. Der Durchmesser der zylindrischen Gemischkammer 13 beträgt etwa 30 mm. Als Hüllgas wird durch die Zufuhrleitung 1 ein inertes Gas, Stickstoff, geleitet. Es kann jedoch in diesem Beispiel meist auch Druckluft verwendet werden, ohne die Qualität der Kohlenstoffbeschichtung wesentlich zu beeinflußen.

Die zur auswechselbaren Düse 11 führenden Leitungen 2 und 3 für das sauerstoffhaltige Gas bzw. den Brennstoff werden mit Vorratsbehältern für Sauerstoff und für Acetylen verbunden. Mittels der Regelventile 5 wird das einströmende Gasvolumen gesteuert.

Die Düse 11 besitzt mehrere Austrittsöffnungen 12 für den Sauerstoff und das Acetylen. Durch unterschiedliche Bauart der Düse 11 läßt sich die Gasmischung in der Gemischkammer 13 beeinflußen, und der Brenner wird durch die auswechselbare Düse 11 besonders reparaturfreundlich gestaltet.

Die Hüllgasaustrittsöffnungen 14 sind konzentrisch um die Austrittsöffnung 15 der Gemischkammer 13 angeordnet und besitzen eine leichte Neigung zur Brennerachse hin. Dadurch kann das unter Druck ausströmende Hüllgas den Querschnitt des aus der Austrittsöffnung 15 der Gemischkammer 13 strömenden Strahls an Beschichtungsmaterial und Verbrennungsprodukten verengen, wodurch das Beschichtungsmaterial (Kohlenstoff) mit höherer Geschwindigkeit auf den zu beschichtenden Preßstempel trifft.

Der Brenner wird bei seinem Einsatz in der Glasartikelherstellung getaktet eingesetzt, wobei Taktzeiten bis zu 1 s möglich sind. Das in die Gemischkammer 13 strömende Gasgemisch wird mittels der Zündquelle 10 gezündet. Die entstehenden Verbrennungsprodukte einschließlich des Beschichtungsmaterials Kohlenstoff werden durch die entstehende Druckwelle aus der Austrittsöffnung 15 der Gemischkammer 13 gefördert und zusätzlich von den Hüllgasstrahlen in Richtung des Preßstempels beschleunigt.

Als Zündquelle 10 ist hier eine elektrische Zündvorrichtung vorgesehen mit einer Zündspannungsversorgung 6.

Der erfindungsgemäße Brenner ermöglicht ein optimales, zeitlich getaktetes Beschichtungsverfahren von Werkstücken mit Kohlenstoff, wobei die Dichte und Festigkeit der Kohlenstoffschicht auf dem Werkstück mittels Hüllgasstrahlen gesteuert werden können. Der Einsatz dieser Hüllgasstrahlen ermöglicht außerdem auch eine Fernbeschichtung von Werkstücken in größerer Entfernung. Das Volumen der Gemischkammer 13 läßt sich beim erfindungsgemäßen Brenner so einstellen, daß für die verschiedenen Anwendungen jeweils die benötigte Menge Beschichtungsmaterial erzeugt wird.

## Patentansprüche

1. Brenner mit mindestens einer Zufuhrleitung für ein Brenngas und mindestens einer Zufuhrleitung für Sauerstoff oder ein sauerstoffhaltiges Gas, der eine Gemischkammer für diese Gase aufweist, wobei sich im Brennerkopf eine mit den Zufuhrleitungen (2, 3) verbundene Düse (11) mit mehreren Austrittsöffnungen (12) für das Brenngas und den Sauerstoff oder das sauerstoffhaltige Gas befindet, weiterhin dem Brennerkopf die Gemischkammer (13) nachgeschaltet ist, die mindestens eine stromabwärts gelegene Austrittsöffnung (15) besitzt, und schließlich mindestens eine Zufuhrleitung (1) für ein Hüllgas jeweils bis zu einer Austrittsöffnung (15) der Gemischkammer (13) geführt ist und die Hüllgasaustrittsöffnungen (14) neben der jeweiligen Austrittsöffnung (15) der Gemischkammer (13) angebracht sind.

2. Brenner nach Anspruch 1, dadurch gekennzeichnet, daß die Gemischkammer (13) in ihrem Volumen verstellbar ist.

3. Brenner nach einem der Ansprüche 1 oder 2, dadurch gekennzeichnet, daß im Brenner (9) Leitungen für ein Kühlmittel vorgesehen sind.

4. Brenner nach einem der Ansprüche 1 bis 3, dadurch gekennzeichnet, daß die im Brennerkopf befindliche Düse (11) auswechselbar ist.

5. Verwendung eines Brenners mit mindestens einer Zufuhrleitung (3) für ein Brenngas und mindestens einer Zufuhrleitung (2) für Sauerstoff oder ein sauerstoffhaltiges Gas zum Kohlenstoffbeschichten, wobei der Brenner im Brennerkopf (9) eine mit den Zufuhrleitungen (2, 3) verbundene Düse (11) mit mehreren Austrittsöffnungen (12) für das Brenngas und den Sauerstoff oder das sauerstoffhaltige Gas enthält und dem Brennerkopf (9) eine Gemischkammer (13) nachgeschaltet ist, die ihrerseits mindestens eine stromabwärts gelegene Austrittsöffnung (15) besitzt, wobei zum Kohlenstoffbeschichten die Austrittsöffnung (15) der Gemischkammer (13) auf den zu beschichtenden Gegenstand gerichtet wird, kohlenstoffhaltiges Brenngas und Sauerstoff oder sauerstoffhaltiges Gas in unterstöchiometrischem Verhältnis in die Gemischkammer (13) des Brenners eingeleitet werden und das entstehende Gasgemisch dort gezündet wird, woraufhin das entstehende Verbrennungsgas/Kolenstoff-Gemisch aus jeder Austrittsöffnung (15) der Gemischkammer (13) mit Druck ausströmt und sich Kohlenstoff auf dem Gegenstand abscheidet.

6. Verwendung eines Brenners zum Kohlenstoffbeschichten nach Anspruch 5, wobei das aus jeder Austrittsöffnung (15) der Gemischkammer (13) des Brenners ausströmende Verbrennungsgas/Kohlenstoff-Gemisch von mindestens einem Hüllgasstrahl umgeben wird.

7. Verwendung eines Brenners zum Kohlenstoffbeschichten nach Anspruch 6, wobei als Hüllgas Druckluft verwendet wird.

8. Verwendung eines Brenners zum Kohlenstoffbeschichten nach Anspruch 6, wobei als Hüllgas ein inertes Gas verwendet wird.

9. Verwendung eines Brenners zum Kohlenstoffbeschichten nach einem der Ansprüche 5 bis 8, wobei das Volumen der Gemischkammer (13) je nach benötigter Kohlenstoffmenge verändert wird.

10. Verwendung eines Brenners zum Kohlenstoffbeschichten nach einem der Ansprüche 5 bis 9, wobei als Brenngas Acetylen verwendet wird.

## Claims

1. Burner having at least one supply line for a combustible gas and at least one supply line for oxygen or an oxygen-containing gas and comprising a mix chamber for said gases, a nozzle (11) connected to the supply lines (2, 3) and having a plurality of outlet orifices (12) for the combustible gas and the oxygen or the oxygen-containing gas being located in the burner head downstream of which the mix chamber (13) is positioned, which has at least one downstream outlet orifice (15), and, finally, at least one supply line (1) for a shielding gas being run, in each case, as far as an outlet orifice (15) of the mix chamber (13) and the shielding gas outlet orifices (14) being disposed next to the corresponding outlet orifice (15) of the mix chamber (13).

2. Burner according to Claim 1, characterized in that the volume of the mix chamber (13) is adjustable.

3. Burner according to either Claim 1 or 2, characterized in that conduits for a coolant are provided for in the burner (9).

4. Burner according to any one of Claims 1 to 3, characterized in that the nozzle (11) situated in the burner head is replaceable.

5. The use of a burner having at least one supply line (3) for a combustible gas and at least one supply line (2) for oxygen or an oxygen-containing gas for carbon-coating, the burner in the burner head (9) comprising a nozzle (11) which is connected to the supply lines (2, 3) and has a plurality of outlet orifices (12) for the combustible gas and the oxygen or the oxygen-containing gas, and downstream of the burner head (9) a mix chamber (13) being situated which in turn has at least one downstream outlet orifice (15), the outlet orifice (15) of the mix chamber (13) being directed, for the purpose of carbon-coating, at the object to be coated, carbon-containing combustible gas and oxygen or oxygen-containing gas in a substoichiometric ratio being introduced into the mix chamber (13) of the burner and the gas mix formed there being ignited, whereupon the combustion gas-carbon mix formed flows out under pressure from each outlet orifice (15) of the mix chamber (13) and carbon is deposited on the object.

6. The use of a burner for carbon-coating according to Claim 5, the combustion gas/carbon mix flowing out from each outlet orifice (15) of the mix chamber (13) of the burner being encompassed by at least one jet of shielding gas.

7. The use of a burner for carbon-coating according to Claim 6, the shielding gas used being compressed air.

8. The use of a burner for carbon-coating according to Claim 6, the shielding gas used being an inert gas.

9. The use of a burner for carbon-coating according to any one of Claims 5 to 8, the volume of the mix chamber (13) being altered in accordance to the amount of carbon required.

10. The use of a burner for carbon-coating according to any one of Claims 5 to 9, the combustible gas used being acetylene.

## Revendications

1. Brûleur avec au moins une conduite d'alimentation pour un gaz combustible et au moins une conduite d'alimentation pour l'oxygène ou un gaz contenant de l'oxygène, qui présente une chambre de mélange pour ces gaz, dans lequel il se trouve dans la tête de brûleur un gicleur (11) raccordé aux conduites d'alimentation (2, 3), avec plusieurs orifices de sortie (12) pour le gaz combustible et l'oxygène ou le gaz contenant de l'oxygène, où la chambre de mélange (13), qui possède au moins un orifice de sortie (15) situé en aval, est en outre disposée à la suite de la tête de brûleur, et où enfin au moins une conduite d'alimentation (1) pour un gaz d'enveloppe est menée jusqu'à un orifice de sortie (15) de la chambre de mélange (13) et les orifices de sortie (14) pour le gaz d'enveloppe sont placés à côté de l'orifice de sortie (15) respectif de la chambre de mélange (13).

2. Brûleur suivant la revendication 1, caractérisé en ce que la chambre de mélange (13) a un volume réglable.

3. Brûleur suivant l'une quelconque des revendications 1 ou 2, caractérisé en ce qu'il est prévu dans le brûleur (9) des conduites pour un agent de refroidissement.

4. Brûleur suivant l'une quelconque des revendications 1 à 3, caractérisé en ce que le gicleur (11) se trouvant dans la tête de brûleur est interchangeable.

5. Utilisation d'un brûleur avec au moins une conduite d'alimentation (3) pour un gaz combustible et au moins une conduite d'alimentation (2) pour l'oxygène ou un gaz contenant de l'oxygène pour le dépôt d'un revêtement de carbone, dans laquelle le brûleur comporte dans la tête de brûleur (9) un gicleur (11) raccordé aux conduites d'alimentation (2, 3), avec plusieurs orifices de sortie (12) pour le gaz combustible et l'oxygène ou le gaz contenant de l'oxygène et où une chambre de mélange (13), qui possède à son tour au moins un orifice de sortie (15) disposé en aval, est placée à la suite de la tête de brûleur (9), dans laquelle l'orifice de sortie (15) de la chambre de mélange (13) est dirigée, pour le dépôt d'un revêtement de carbone, vers l'objet à revêtir, un gaz combustible contenant du carbone et l'oxygène ou un gaz contenant de l'oxygène sont introduits en proportions sous-stoechiométriques dans la chambre de mélange (13) du brûleur et le mélange de gaz formé y est enflammé, le mélange gaz de combustion/carbone qui apparaît étant ensuite éjecté sous pression hors de chaque orifice de sortie (15) de la chambre de mélange (13) et le carbone se déposant sur l'objet.

6. Utilisation d'un brûleur pour le dépôt d'un revêtement de carbone suivant la revendication 5, dans laquelle le mélange gaz de combustion/carbone éjecté de chaque orifice de sortie (15) de la chambre de mélange (13) du brûleur est entouré d'au moins un jet de gaz d'enveloppe.

7. Utilisation d'un brûleur pour le dépôt d'un revêtement de carbone suivant la revendication 6, dans laquelle on utilise de l'air comprimé comme gaz d'enveloppe.

8. Utilisation d'un brûleur pour le dépôt d'un revêtement de carbone suivant la revendication 6, dans laquelle on utilise un gaz inerte comme gaz d'enveloppe.

9. Utilisation d'un brûleur pour le dépôt d'un revêtement de carbone suivant l'une quelconque des revendications 5 à 8, dans laquelle le volume de la chambre de mélange (13) est modifié en fonction du débit de carbone requis.

10. Utilisation d'un brûleur pour le dépôt d'un revêtement de carbone suivant l'une quelconque des revendications 5 à 9, dans laquelle on utilise l'acétylène comme gaz combustible.
